# EUROPEAN PATENT APPLICATION

(11) **EP 3 089 243 A1**
(43) Date of publication of application: **02.11.2016**
(21) Application number: 14873662.2
(22) Date of filing: 09.12.2014
(51) Int. Cl.: H01M 4/38, H01M 4/46, H01M 4/134

(54) **NEGATIVE ACTIVE MATERIAL FOR LITHIUM SECONDARY BATTERY**

(30) Priority: 24.12.2013 KR 20130163123
(71) Applicant: Iljin Electronic Co., Ltd., Hwaseong-si, Gyeonggi-do 445-380 (KR)
(72) Inventor: PARK, Cheol Ho, Gwangmyeong-si Gyeonggi-do 423-851 (KR); KIM, Seon Kyong, Seoul 156-827 (KR); CHOI, Young Pil, Chungju-si Chungcheongbuk-do 380-759 (KR); KIM, Hyang Yeon, Seoul 132-791 (KR); SUNG, Min Seok, Hwaseong-si Gyeonggi-do 445-990 (KR); LEE, Seung Chul, Seoul 158-771 (KR); KIM, Jae Woong, Daejeon 305-729 (KR)
(74) Representative: Zech, Stefan Markus
(86) International application number: PCT/KR2014/012087
(87) International publication number: WO 2015/099325

(57) **Abstract**

A negative active material for a lithium secondary battery according to an exemplary embodiment of the present invention includes: silicon (Si) of 40 to 60 at%; and an alloy including copper (Cu) and aluminum (Al), in which a ratio of the aluminum (Al) to the copper (Cu) included in the alloy is 30:70 to 65:35, and the silicon (Si) does not substantially form an intermetallic compound within the alloy.

## Description

### [Technical Field]

The present invention relates to a negative active material for a lithium secondary battery, and more particularly, to a negative active material for a lithium secondary battery having a high active material discharge capacity and excellent initial efficiency.

### [Background Art]

A lithium battery in the related art uses a lithium metal as a negative active material, but when a lithium metal is used, a battery is short-circuited by formation of dendrite to cause danger of explosion, so that a carbon-based material is widely used as a negative active material, instead of a lithium metal.

The carbon-based active material includes crystalline carbon, such as natural graphite and artificial graphite, and amorphous carbon, such as soft carbon and hard carbon. However, the amorphous carbon has a large capacity, but has a problem in that irreversibility is large during a charging/discharging process. Graphite is representatively used as the crystalline carbon, and has a theoretical limit capacity of 372 mAh/g, which is large, so that the graphite is used as a negative active material.

In order to develop a next-generation high capacity lithium battery, a development of a negative active material having a high capacity beyond the capacity of graphite is essential. To this end, a material, which is currently and actively researched, is a negative active material using a silicon alloy. The silicon has a high capacity and a high energy density, and capable of occluding and discharging more lithium ions than the negative active material using the carbon-based material, so that it is possible to manufacture a secondary battery having a high capacity and a high energy density.

The silicon-based active material has a problem in a volume expansion, and in order to solve the problem, a silicon alloy, in which silicon is finely dispersed within a basic metal material is considered as the technology having the most probability. A representative silicon-based alloy is disclosed in Korean Patent No. 10-1263265. More particularly, the Patent discloses the silicon-based alloy, in which silicon (Si), titanium (Ti), and iron (Fe) are mixed in a ratio of 67%:16.5%:16.5%, 70%:15%:15%, or 74%:13%:13%, thereby exhibiting a high capacity characteristic and improving a cycle life.

However, the silicon-based alloy including silicon (Si), titanium (Ti), and iron (Fe) includes a matrix on TiFeSi2 that is an intermetallic compound, so that the amount of silicon, which is substantially involved in charging/discharging lithium ions, is small. That is, in the silicon-based alloy including silicon (Si), titanium (Ti), and iron (Fe) in a ratio of 70%:15%:15%, silicon of about 30% is used for forming TiFeSi₂, so that silicon of only 40% is involved in occlusion and discharging lithium ions. Based on the fact, a negative active material including the silicon-based alloy including silicon (Si), titanium (Ti), and iron (Fe) has a relatively small capacity, which does not satisfy needs of a consumer requiring a high capacity battery, and restricts an advantage of silicon appropriate for implementing a high capacity battery.

Further, the silicon-based alloy negative active material is generally fabricated by melting silicon and metals by an inductive melting method or an arc melting method, and then using a rapid solidifying method of dispersing the melted material in a rotated copper roll through a fine nozzle. However, when silicon is included in the melted material with a high content, viscosity of the melted material is increased, so that there are problems in that it is difficult to disperse the melted material through the fine nozzle, and process yield is decreased. In order to solve the problem, a method of increasing a size of a hole of the fine nozzle has been used, but when a size of a hole of the fine nozzle is increased, a cooling speed of the melted material is decreased, a tissue of a final alloy becomes coarse.

Accordingly, a new negative active material capable of implementing a high capacity secondary battery and improving yield of a fabricating process is continuously demanded.

### [Disclosure]

### [Technical Problem]

An object of the present invention is to provide a negative active material for a lithium secondary battery, which is capable of a secondary battery having a high capacity and excellent initial efficiency.

Another object of the present invention is to provide a negative active material for a lithium secondary battery, which is capable of improving yield of a fabricating process of a negative active material.

Objects of the present invention are not limited to the objects described above, and other objects that are not described will be clearly understood by a person skilled in the art from the description below.

### [Technical Solution]

In order to achieve the aforementioned object, a negative active material for a lithium secondary battery according to an exemplary embodiment of the present invention includes: silicon (Si) of 40 to 60 at%; and an alloy including copper (Cu) and aluminum (Al), in which a ratio of the aluminum (Al) to the copper (Cu) included in the alloy is 30:70 to 65:35, and the silicon (Si) does not substantially form an intermetallic compound within the alloy.

The ratio of the aluminum (Al) to the copper (Cu) included in the alloy may be 50:50.

When it is assumed that the copper (Cu) is included in the alloy by A at% and the aluminum (Al) is included in the alloy by B at%, A + B may be 30 to 40.

The alloy may further include iron (Fe) of 1 to 5 at%.

The alloy may further include titanium (Ti) of 1 to 5 at%.

The alloy may further include zirconium (Zr) of 1 to 5 at%.

Other detailed matters of the exemplary embodiment are included in the detailed description and the drawings.

### [Advantageous Effects]

The present invention has an effect in that it is possible to implement a secondary battery having a high capacity and excellent initial efficiency.

Further, the present invention has an effect in that it is possible to improve yield of a fabricating process of a negative active material.

Objects of the present invention are not limited to the objects described above, and other objects that are not described will be clearly understood by a person skilled in the art from the description below.

### [Description of Drawings]

FIGs. 1A to 1J are SEM pictures of Examples 1 to 9, and Comparative Example 1.
FIGs. 2A to 2E are XRD data of Examples 1 to 9, and Comparative Example 1.
FIG. 3 is a table representing an active material charging quantity, an active material discharging quantity, and initial efficiency of negative active materials fabricated in Examples 1 to 9, and Comparative Example 1.

### [Best Mode]

In order to achieve the aforementioned object, a negative active material for a lithium secondary battery according to an exemplary embodiment of the present invention includes: silicon (Si) of 40 to 60 at%; and an alloy including copper (Cu) and aluminum (Al), in which a ratio of the aluminum (Al) to the copper (Cu) included in the alloy is 30:70 to 65:35, and the silicon (Si) does not substantially form an intermetallic compound within the alloy.

### [Mode for Carrying out the Invention]

Advantages and features of the present disclosure and methods accomplishing the advantages and features will become apparent from the following detailed description of exemplary embodiments with reference to the accompanying drawings. However, the present invention is not limited to exemplary embodiment disclosed herein but will be implemented in various forms. The exemplary embodiments are provided so that the present invention is completely disclosed, and a person of ordinary skilled in the art can fully understand the scope of the present invention. Therefore, the present invention will be defined only by the scope of the appended claims.

Respective characteristics of several exemplary embodiments of the present disclosure may be partially or entirely coupled or combined, and technically and variously connected and driven enough for those skilled in the art to fully understand, and respective exemplary embodiments may be independently carried out, and implemented together according to an associated relation.

The term "approximate" used in the present specification is used as a numerical value or a meaning close to the numerical value when an unique manufacturing and material allowable error is suggested to a mentioned meaning, and is used for preventing an unconscionable infringer from illegally using the disclosed contents including an accurate or absolute numerical value mentioned for helping the understanding of the present invention.

A unit "%" used in the present specification means "atom%" unless otherwise regulated.

The present invention is an alloy including silicon (Si), copper (Cu), and aluminum (Al), and silicon of 40 to 60at% exists within the alloy, a ratio of aluminum to copper included in the alloy is 30:70 to 65:35, and silicon (Si) within the alloy provides a negative active material which does not substantially form an intermetallic compound.

In the present invention, silicon (Si) may be involved in occlusion and discharge of lithium ions when the negative active material is used as a battery.

In the present invention, silicon (Si) of 40 to 60 at% exists within the alloy. Accordingly, it is possible to decrease viscosity of a melted material used for fabricating a negative active material, compared to a silicon-based negative active material in the related art, in which silicon (Si) of more than 60 at% exists within an alloy. Accordingly, it is possible to improve yield of a fabricating process of the negative active material by dispersing the more amount of melted material through a fine nozzle. Further, it is possible to finely fabricate a tissue of a final alloy by improving a cooling speed of the melted material.

In the present invention, silicon (Si) does not substantially form an intermetallic compound within the alloy.

The intermetallic compound in a metal technical field refers to a compound, in which two or more metals or semi-metal elements are combined in a simple integer ratio. In contrast to a solid solution that is a common alloy, the intermetallic compound has a crystal structure or a physical-chemical property, which is clearly different from that of the corresponding component element, and generally has a uniform melting point.

In the present invention, the characteristic that silicon (Si) does not substantially form the intermetallic compound within the alloy may mean that a peak of a compound, in which silicon and a metal are combined in an integer ratio, is not observed as a result of the ex situ XRD analysis of the alloy.

In the present invention, since silicon (Si) does not substantially form an intermetallic compound within the alloy, all of the silicon included in the alloy may be substantially involved in occlusion and discharge of the lithium ions. Accordingly, in contrast to the negative active material in the related art, in which silicon (Si) forms the intermetallic compound, it is possible to maximally use silicon (Si) included in the alloy for occlusion and discharge of the lithium ions. As a result, when the negative active material of the present invention is applied to a secondary battery, it is possible to implement a secondary battery having a high capacity.

In the present invention, copper (Cu), and aluminum (Al) form a metal matrix, in which silicon (Si) is dispersible. Copper (Cu) and aluminum (Al) may form a metal matrix while forming a solid solution or an intermetallic compound.

In the present invention, a ratio of aluminum (Al) to copper (Cu) included in the alloy is 30 to 70 to 65 to 35.

When the ratio of aluminum (Al) to copper (Cu) included in the alloy is less than 30 to 70, a life characteristic of the negative active material included in the alloy may be degraded, and when the ratio of aluminum (Al) to copper (Cu) included in the alloy is greater than 65 to 35, it is difficult to implement a battery having a high capacity.

In the present invention, a ratio of aluminum (Al) to copper (Cu) included in the alloy is 50 to 50. When the ratio of aluminum (Al) to copper (Cu) is 50 to 50, the final alloy may have finer tissues.

In the present invention, when it is assumed that copper (Cu) is included in the alloy by A at% and aluminum (Al) is included in the alloy by B at%, A + B may be 30 to 40.

In addition to silicon (Si), copper (Cu), and aluminum (Al), iron (Fe) of 1 to 5 at% may be further included in the alloy of the present invention.

In the present invention, iron (Fe) is added to the alloy composed of silicon (Si), copper (Cu), and aluminum (Al) to serve to improve a charging quantity and a discharging quantity of the negative active material.

In addition to silicon (Si), copper (Cu), aluminum (Al), and iron (Fe), titanium (Ti) of 1 to 5 at% may be further included in the alloy of the present invention.

In the present invention, titanium (Ti) is added to the alloy composed of silicon (Si), copper (Cu), aluminum (Al), and iron (Fe) to serve to make tissues of the final alloy be fine.

In addition to silicon (Si), copper (Cu), aluminum (Al), and iron (Fe), zirconium (Zr) of 1 to 5 at% may be further included in the alloy of the present invention.

In the present invention, zirconium (Zr) is added to the alloy composed of silicon (Si), copper (Cu), aluminum (Al), and iron (Fe) to serve to make tissues of the final alloy be fine and improve a life characteristic of the negative active material.

In the present invention, iron (Fe), titanium (Ti), and zirconium (Zr) do not substantially form an intermetallic compound with silicon (Si). That is, as a result of the analysis of the Si-Cu-Al-Fe alloy, the Si-Cu-Al-Fe-Ti alloy, the Si-Cu-Al-Fe-Zr alloy by the ex situ XRD, a peak of the compound, in which iron (Fe), titanium (Ti), or zirconium (Zr) is combined with silicon (Si) in an integer ratio, is not observed.

### Example 1

The method of fabricating the negative active material of the present invention is not particularly limited, and for example, various fine powder preparing methods (a gas atomizer method, a centrifugal gas atomizer method, a plasma atomizer method, a rotating electrode method, and a mechanical alloying method) publicly known in the art may be used as the method.

In Example 1, a negative active material having a composition of Si₅₀(Cu₆₁Al₃₉)₅₀ was fabricated by mixing silicon (Si), copper (Cu), and aluminum (Al), melting the mixture by an arc melting method and the like, and then applying a single-roll rapid solidification which injects the melt to a copper roll.

### Example 2

In Example 2, a negative active material was fabricated by the same manner as that of Example 1 except the negative active material has a composition of Si₅₀(Cu₅₀Al₅₀)₅₀.

### Example 3

In Example 3, a negative active material was fabricated by the same manner as that of Example 1 except the negative active material has a composition of Si₅₀(Cu₃₃Al₆₇)₅₀.

### Example 4

In Example 4, a negative active material was fabricated by the same manner as that of Example 1 except the negative active material has a composition of Si₆₀(Cu₅₀Al₅₀)_{37.5}Fe_{2.5}.

### Example 5

In Example 5, a negative active material was fabricated by the same manner as that of Example 1 except the negative active material has a composition of Si₆₀(Cu₅₀Al₅₀)₃₅Fe₅.

### Example 6

In Example 6, a negative active material was fabricated by the same manner as that of Example 1 except the negative active material has a composition of Si₆₀(Cu₅₀Al₅₀)₃₅Fe_{2.5}Zr_{2.5}.

### Example 7

In Example 7, a negative active material was fabricated by the same manner as that of Example 1 except the negative active material has a composition of Si₆₀(Cu₅₀Al₅₀)_{32.5}Fe₅Zr_{2.5}.

### Example 8

In Example 8, a negative active material was fabricated by the same manner as that of Example 1 except the negative active material has a composition of Si₆₀(Cu₅₀Al₅₀)₃₅Fe_{2.5}Ti_{2.5}.

### Example 9

In Example 9, a negative active material was fabricated by the same manner as that of Example 1 except the negative active material has a composition of Si₆₀(Cu₅₀Al₅₀)_{32.5}Fe₅Ti_{2.5}.

### Comparative Example 1

In Comparative Example 1, a negative active material was fabricated by the same manner as that of Example 1 by mixing silicon (Si), titanium (Ti), and iron (Fe) except the negative active material has a composition of Si₇₀Ti₁₅Fe₁₅.

### 1. SEM analysis

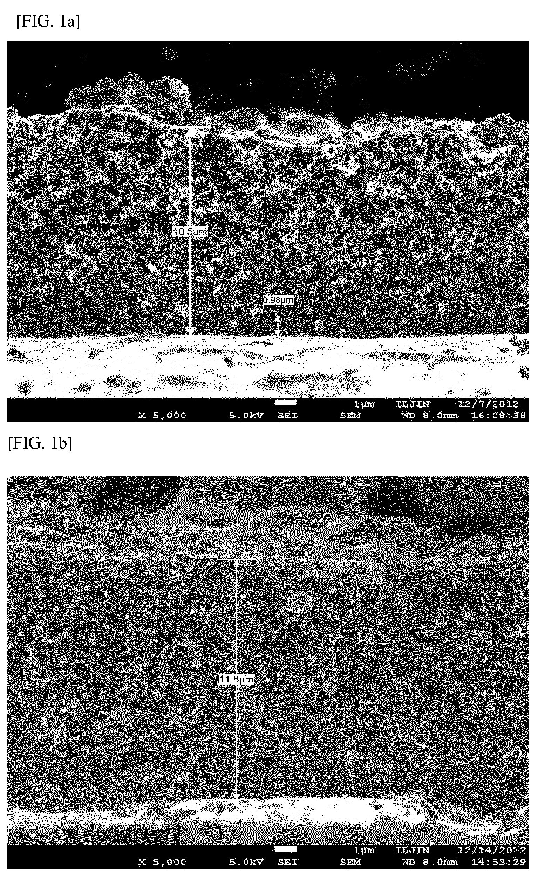

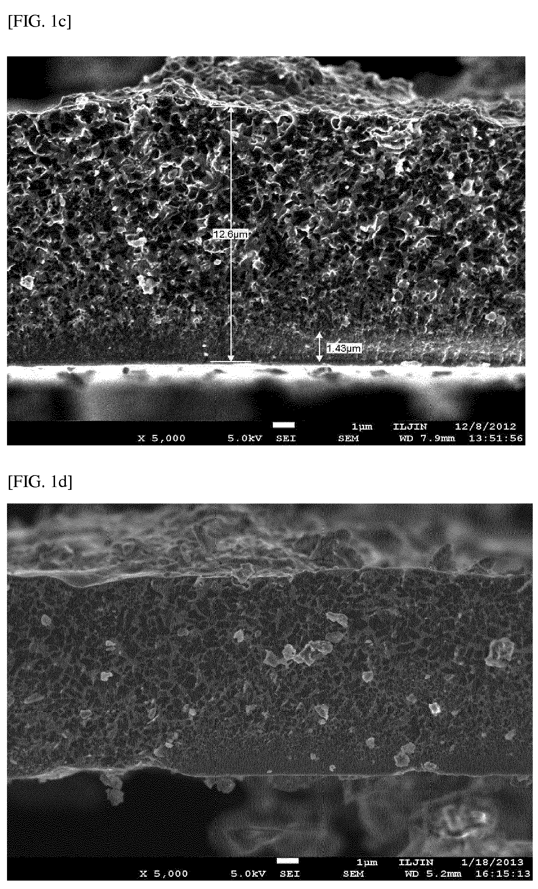

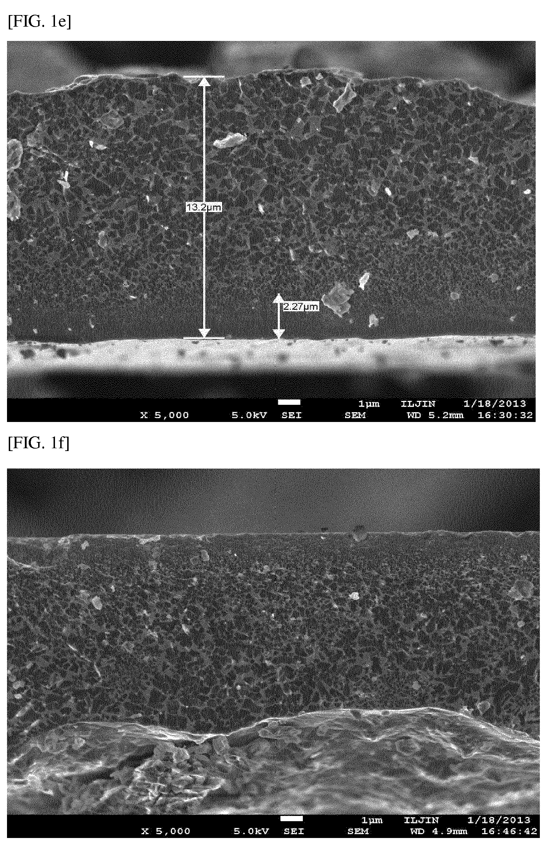

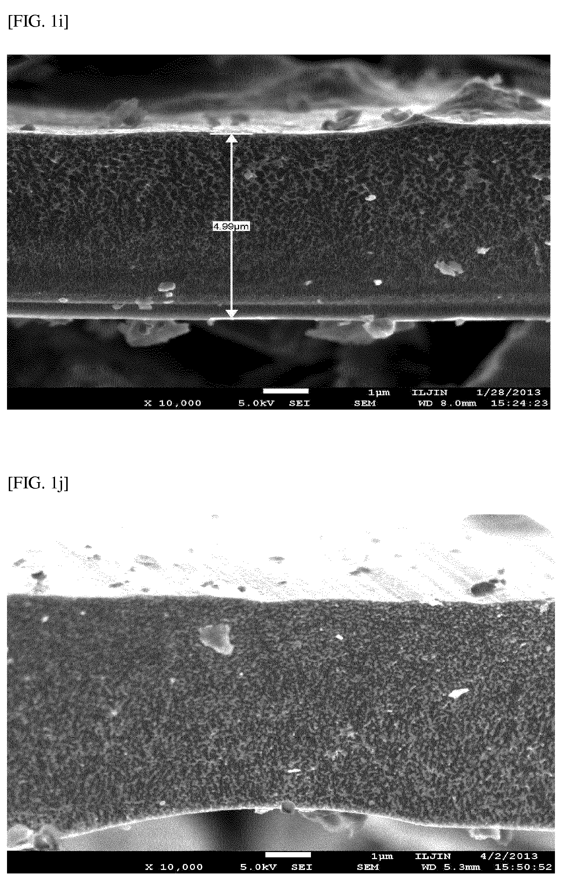

A Scanning Electron Microscopy (SEM) analysis was performed on the fabricated negative active material. FIGs. 1A to 1I are SEM pictures of the enlarged negative active materials of Examples 1 to 9, and FIG. 1J is an SEM picture of the enlarged negative active material of Comparative Example 1.

Referring to FIGs. 1A to 1C, it can be seen that the negative active material, in which the ratio of aluminum (Al) to copper (Cu) is 50:50, that is, which has the composition of Si₅₀(Cu₅₀Al₅₀)₅₀, has relatively finer tissues than those of the negative active material having the composition of Si₅₀(Cu₆₁Al₃₉)₅₀ and the negative active material having the composition of Si₅₀(Cu₃₃Al₆₇)₅₀.

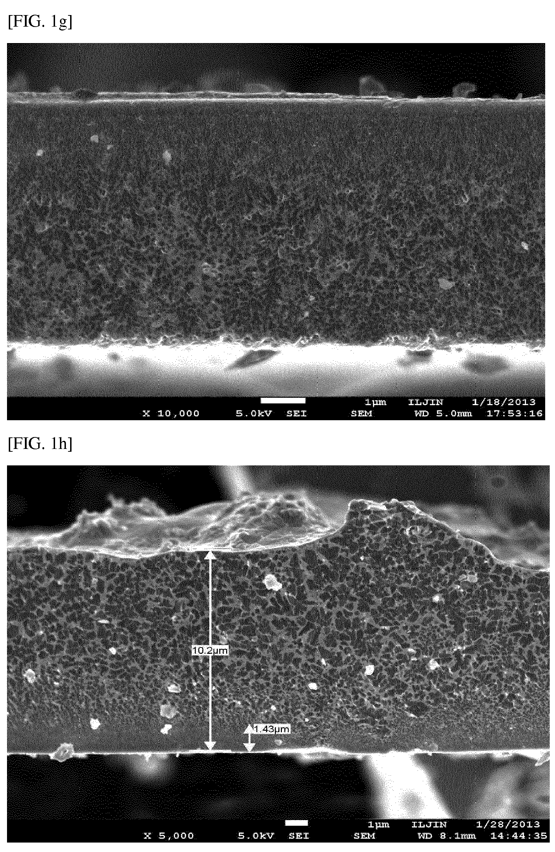

Further, referring to FIGs. 1F and 1G, it can be seen that titanium (Ti) is added, so that the tissues of the negative active material are finer.

Further, referring to FIGs. 1H and 1I, it can be seen that zirconium (Zr) is added, so that the tissues of the negative active material are finer.

### 2. XRD analysis

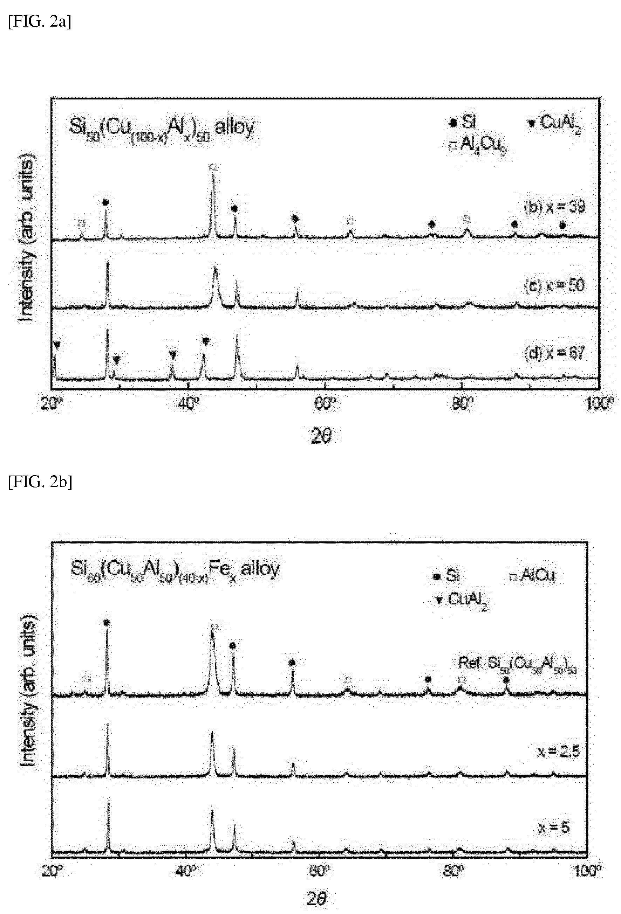

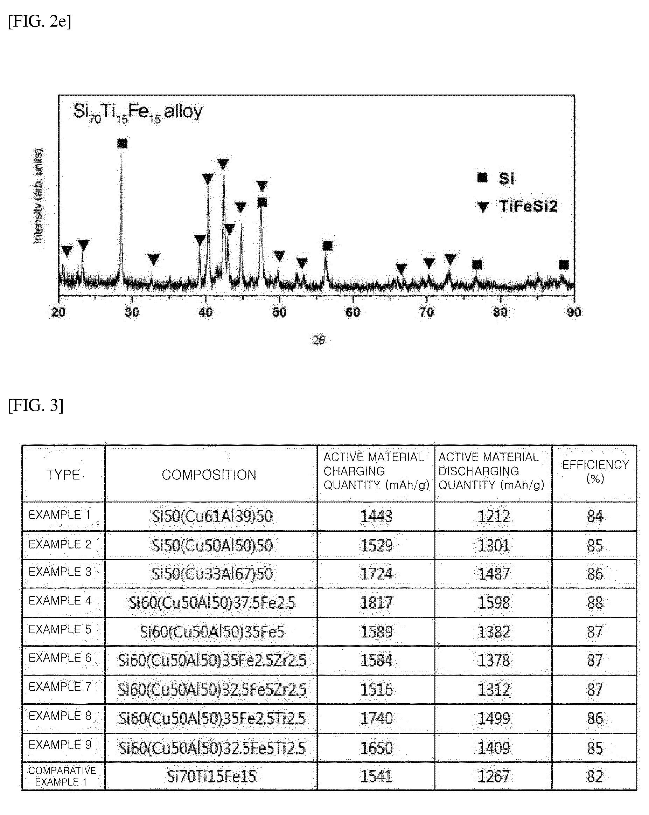

The Cu kα ray XRD measurement was performed on the negative active materials fabricated in Examples 1 to 9, and the results thereof are represented in FIGs. 2A to 2D. Further, the Cu kα ray XRD measurement was performed on the negative active material fabricated in Comparative Example 1, and the result thereof is represented in FIG. 2E.

FIG. 2A represents XRD data for the negative active materials fabricated in Examples 1 to 3. Referring to FIG. 2A, as the result of the XRD analysis of the negative active materials fabricated in Examples 1 to 3, it can be seen that only the peak of silicon (Si) and the peak of the intermetallic compound (that is, CuAl₂ and Al₄Cu₉) of copper (Cu) and aluminum (Al) are present, but the peak of the compound, in which silicon (Si) and the metal are combined in an integer ratio, is not observed. That is, it can be seen that silicon (Si) does not substantially form an intermetallic compound within the alloy.

FIG. 2B represents XRD data for the negative active materials fabricated in Examples 4 and 5. Referring to FIG. 2B, as the result of the XRD analysis of the negative active materials fabricated in Examples 4 and 5, it can be seen that only the peak of silicon (Si) and the peak of the intermetallic compound (that is, CuAl and CuAl₂) of copper (Cu) and aluminum (Al) are present, but the peak of the compound, in which silicon (Si) and the metal are combined in an integer ratio, is not observed. Based on the fact, it can be seen that even if iron (Fe) is added to the alloy composed of silicon (Si), copper (Cu), and aluminum (Al) by 1 to 5 at%, silicon (Si) does not substantially form an intermetallic compound within the alloy.

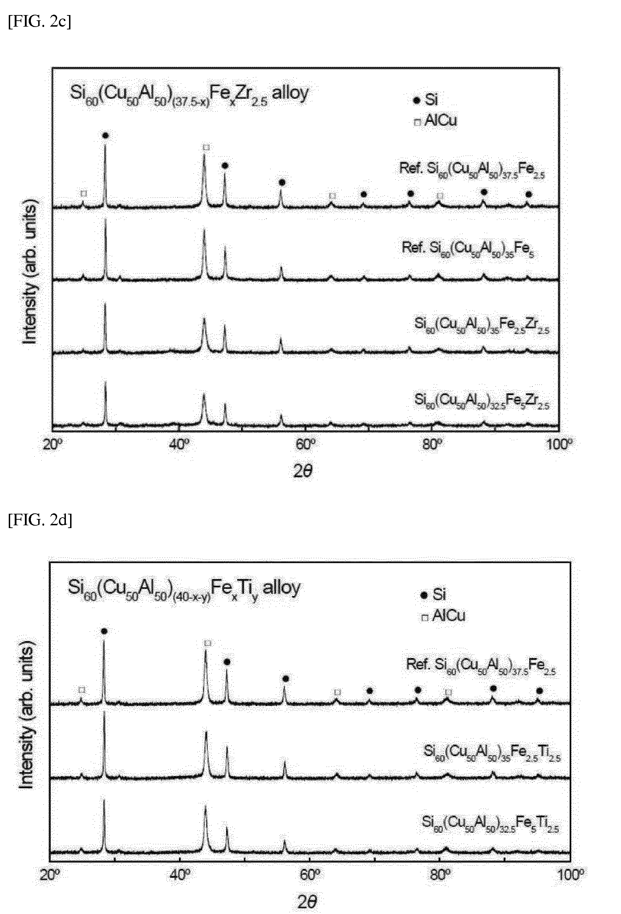

FIG. 2C represents XRD data for the negative active materials fabricated in Examples 6 and 7. Referring to FIG. 2C, as the result of the XRD analysis of the negative active materials fabricated in Examples 6 and 7, it can be seen that only the peak of silicon (Si) and the peak of the intermetallic compound (that is, AlCu and CuAl₂) of copper (Cu) and aluminum (Al) are present, but the peak of the compound, in which silicon (Si) and the metal are combined in an integer ratio, is not observed. Based on the fact, it can be seen that even if zirconium (Zr) is added to the alloy composed of silicon (Si), copper (Cu), aluminum (Al), and iron (Fe) by 1 to 5 at%, silicon (Si) does not substantially form an intermetallic compound within the alloy.

FIG. 2D represents XRD data for the negative active materials fabricated in Examples 8 and 9. Referring to FIG. 2D, as the result of the XRD analysis of the negative active materials fabricated in Examples 8 and 9, it can be seen that only the peak of silicon (Si) and the peak of the intermetallic compound (that is, AlCu) of copper (Cu) and aluminum (Al) are present, but the peak of the compound, in which silicon (Si) and the metal are combined in an integer ratio, is not observed. Based on the fact, it can be seen that even if titanium (Ti) is added to the alloy composed of silicon (Si), copper (Cu), aluminum (Al), and iron (Fe) by 1 to 5 at%, silicon (Si) does not substantially form an intermetallic compound within the alloy.

FIG. 2E represents XRD data for the negative active material fabricated in Comparative Example 1. Referring to FIG. 2E, as the result of the XRD analysis of the negative active material fabricated in Comparative Example 1, it can be seen that the peak of the compound, in which silicon (Si), titanium (Ti), and iron (Fe) are combined in an integer ratio, is present. That is, in the negative active material of Comparative Example 1, it can be seen that silicon (Si) substantially forms an intermetallic compound within the alloy.

### 3. Active material discharging quantity and initial efficiency

Secondary batteries shaped like coins were manufactured by using the negative active materials fabricated in Examples 1 to 9 and Comparative Example 1, and the charging/discharging evaluation was performed. The secondary batteries were manufactured so that a mixing ratio of the active material, a conductive agent (KB-based conductive agent), and a binder (PAI-based binder) during the manufacturing of the plate shaped like a coin is 86.6:3.4:10 (active material : conductive agent : binder) wt%. The manufactured plate was charged/discharged one time, and then the active material charging quantity (mAh/g), the active material discharging quantity (mAh/g), and initial efficiency (%) were measured, and the results of the measurement are represented in FIG. 3.

Although not limited by theory, in the cases of Examples 1 to 9, silicon does not substantially form an intermetallic compound within the alloy, so that the relatively larger amount of silicon is involved in occlusion and discharging of lithium ions, but in Comparative Example 1, silicon forms an intermetallic compound within the alloy, so that the relatively small amount of silicon is involved in occlusion and discharging of lithium ions, so that it is determined that the aforementioned result was drawn (although the negative active material of Example 1 represents the smaller active material discharging quantity than that of the negative active material of Comparative Example 1, but in consideration that silicon (Si) is added to the negative active material of Example 1 by 50 at%, which is substantially the small quantity, so that it can be seen that silicon (Si) of a relatively higher ratio is involved in occlusion and discharging of lithium ions in the negative active material of Example 1, compared to the negative active material of Comparative Example 1).

Further, referring to FIG. 3, it can be seen that the negative active materials of Examples 1 to 9 represent more excellent initial efficiency than that of the negative active material of Comparative Example 1.

The exemplary embodiments of the present invention have been described in more detail with reference to the accompanying drawings, but the present invention is not essentially limited to the exemplary embodiments, and may be variously modified and carried out within the scope of the technical spirit of the present invention. Accordingly, the various exemplary embodiments disclosed herein are not intended to limit the technical spirit but describe with the true scope and spirit being indicated by the following claims. The scope of the present invention should be construed based on the following appended claims and it should be construed that the technical spirit included within the scope equivalent to the claims belongs to the present invention.

## Claims

1. A negative active material for a lithium secondary battery, comprising:
silicon (Si) of 40 to 60 at%; and
an alloy including copper (Cu) and aluminum (Al),
wherein a ratio of the aluminum (Al) to the copper (Cu) included in the alloy is 30:70 to 65:35, and the silicon (Si) does not substantially form an intermetallic compound within the alloy.

2. The negative active material of claim 1, wherein the ratio of the aluminum (Al) to the copper (Cu) included in the alloy is 50:50.

3. The negative active material of claim 1, wherein when it is assumed that the copper (Cu) is included in the alloy by A at% and the aluminum (Al) is included in the alloy by B at%, A + B is 30 to 40.

4. The negative active material of claim 1, wherein the alloy further includes iron (Fe) of 1 to 5 at%.

5. The negative active material of claim 4, wherein the alloy further includes titanium (Ti) of 1 to 5 at%.

6. The negative active material of claim 4, wherein the alloy further includes zirconium (Zr) of 1 to 5 at%.
